# EUROPEAN PATENT APPLICATION

(11) **EP 2 575 198 A2**
(43) Date of publication of application: **03.04.2013**
(21) Application number: 12184284.3
(22) Date of filing: 13.09.2012
(51) Int. Cl.: H01M 4/58, H01M 10/0525, H01M 4/136

(54) **Lithium ion secondary battery**

(30) Priority: 27.09.2011 JP 2011210216
(71) Applicant: Fuji Jukogyo Kabushiki Kaisha, Tokyo 160-8316 (JP)
(72) Inventor: Yanagita, Hideo, Tokyo, Tokyo 160-8316 (JP); Takimoto, Kazuki, Tokyo, Tokyo 160-8316 (JP)
(74) Representative: Sajda, Wolf E.

(57) **Abstract**

There is provided is a lithium ion secondary battery (20). The lithium ion secondary battery (20) includes: a positive electrode (21) having a positive electrode active material layer (21 a) containing a positive electrode active material containing a vanadium-based compound; and a negative electrode (22) having a negative electrode active material layer (22a) containing a negative electrode active material into which lithium ions can be inserted/removed reversibly. A vanadium-based compound is dispersed in the negative electrode active material layer (22a). As a result, a vanadium-based compound, corresponding to the vanadium-based compound contained in the positive electrode active material is dispersed in the negative electrode active material layer (22a).

## Description

### BACKGROUND OF THE INVENTION

### 1. Field of the Invention

The present invention relates to a lithium ion secondary battery, and more particularly, to a lithium ion secondary battery that contains a vanadium-based compound as a positive electrode active material.

### 2. Description of the Related Art

In recent years, lithium ion secondary batteries have come to be used as power sources of, for instance, electronic devices and communication devices and also as power sources of electric automobiles (EVs, HEVs and the like). Lithium ion secondary batteries that boast enhanced characteristics are desirable, for instance in terms of exhibiting better energy density, (higher capacity), better output density (higher output), better cycle characteristics (better cycle life) as well as and high safety.

Vanadium-based positive electrode active materials such as vanadium oxides, lithium vanadium oxides and the like have received attention in recent years as positive electrode active materials for high-output, high-capacity lithium ion secondary batteries. Vanadium-containing phosphate oxides, for instance NASICON-type lithium vanadium phosphate, and particularly Li₃V₂(PO₄)₃, have received attention among such vanadium-based positive electrode active materials.

Herein, Li₃V₂(PO₄)₃ has an operating voltage of 3.8 V referred to Li/Li⁺, and exhibits significant capacity, 130 to 195 mAh/g, for respective plateau potentials. Electron conductivity is further enhanced, and higher outputs achieved, thanks to techniques in which a conductive carbon coating film is formed on a positive electrode active material surface in which olivine iron materials are also used.

However, vanadium-based positive electrode active materials have a known problem in that vanadium is leached out of the positive electrode by hydrogen ions derived from hydrogen fluoride that is generated upon decomposition of an electrolyte solution, in high-temperature environments and/or after charge and discharge cycles. This constitutes a cause of impaired characteristics of the storage device that comprises the positive electrode active material.

In order to prevent leaching of vanadium, a known technology in Japanese Unexamined Patent Application Publication JP-A-2009-231 206 involves, for instance, suppressing vanadium leaching in high-temperature environments by forming a vanadium compound having a greater valence than (III), through an oxidation treatment, in air, of Li₃V₂(PO₄)₃ particles being a positive electrode active material.

The method of JP-A-2009-231 206 succeeds in mitigating vanadium leaching somewhat, but, however, does not manage to prevent it completely. There are other known measures against vanadium leaching, but all resort to methods that involve preventing vanadium leaching by covering a positive electrode active material with other materials. A thicker cover layer for preventing leaching translates however into increased resistance of the positive electrode itself and thus into lower conductivity.

Also, the net content of Li₃V₂(PO₄)₃ in the positive electrode active material decreases on account of the cover layer, and hence the density of the active material is lower, and both cycle characteristics and rate performance are impaired. This precludes achieving sufficient battery characteristics, which is problematic.

### SUMMARY OF THE INVENTION

In the light of the above, it is an object of the present invention to provide a lithium ion secondary battery that allows preventing loss of battery characteristics caused by vanadium leaching.

An aspect of the present invention provides a lithium ion secondary battery that includes: a positive electrode having a positive electrode active material layer containing a positive electrode active material having a vanadium-based compound as a main component; and a negative electrode having a negative electrode active material layer containing a negative electrode active material into which lithium ions can be inserted/removed reversibly. A vanadium-based compound is dispersed in the negative electrode active material layer.

The inventors found that impairment of cycle characteristics and rate performance is prevented, even if vanadium leaching occurs in the positive electrode, by causing a vanadium-based compound to be dispersed in the negative electrode active material layer. The vanadium-based compound that is dispersed in the negative electrode active material layer may be identical to, or different from, the vanadium-based compound that is contained in the positive electrode active material layer.

The reason why battery characteristics are not impaired, even if vanadium leaching is not occurred is not wholly clear, but the considerations of the inventors on this regard are given below. Any actions derived from the considerations set forth below, however, are not meant to limit in any way the technical scope of the invention of the present application.

An explanation follows first on the mechanism whereby battery characteristics are impaired when vanadium leaching occurs in the positive electrode. As is known, vanadium leaches from a positive electrode active material, as described above, upon repeated charge and discharge of a lithium ion secondary battery. The vanadium that leaches out of the positive electrode active material precipitates inhomogeneously, in the form of a vanadium compound, on the surface of the negative electrode.

The vanadium compound that precipitates on the negative electrode has a potential of about 3 V, referred to Li/Li⁺. By contrast, the potential of the negative electrode active material is only of about 0.1 V, referred to Li/Li⁺, and hence a potential difference arises locally between the negative electrode active material and the precipitated vanadium compound. In the negative electrode active material layer, therefore, lithium ions are drawn by, and migrate towards, the high-potential vanadium compound on the negative electrode surface. The lithium ion concentration increases accordingly in the vicinity of the vanadium compound.

The potential of the portion at which lithium ion concentration has increased drops even further, and lithium precipitates, at about 0 V. Lithium ions in the electrolyte solution are also drawn towards the vanadium compound on the negative electrode surface at high potential. Lithium ions concentrate thereby, which results in lithium precipitation. The vanadium compound on the negative electrode surface constitutes a resistive layer that hinders insertion/deinsertion of lithium ion to/from the negative electrode active material. Vanadium leached from the positive electrode active material further accumulates and grows on the vanadium compound, and a vicious circle is repeated thereby.

In the present invention, to counter the above problem, a vanadium compound is caused to be dispersed in the negative electrode active material layer, as a result of which portions at which a potential difference is generated by the vanadium compound and the negative electrode active material layer becomes dispersed beforehand in the negative electrode active material layer. As a result, this allows suppressing local build-up of lithium ion concentration in the negative electrode active material layer.

Lithium ions in the electrolyte solution are also dispersed throughout the interior of the negative electrode active material, and hence it becomes possible to prevent that vanadium that leaches out of the positive electrode active material should concentrate locally on the negative electrode surface. Therefore, precipitation of lithium ion in the negative electrode active material can be suppressed, and growth of vanadium compounds, as a resistive layer, can likewise be suppressed. Improved cycle characteristics and rate performance can be expected to be achieved as a result.

Preferably, the above vanadium-based compound is a vanadium oxide or a vanadium phosphate compound. More preferably, the vanadium oxide is selected from among V₂O₅, V₃O₈ and LiₓV₂O₅, and the vanadium phosphate compound is selected from among LiVPO₄ and Li₃V₂(PO₄)₃.

Preferably, dispersion of the vanadium-based compound takes place in an addition amount of 0.5 to 10 wt% with respect to the negative electrode active material layer. If the addition amount of the vanadium-based compound drops below 0.5 wt% with respect to the negative electrode active material layer, it is deemed that the vanadium-based compound fails to disperse completely in the negative electrode active material layer, and virtually no effect is elicited in terms of suppressing local concentration of lithium ions. If the addition amount of the vanadium-based compound exceeds 10 wt%, by contrast, the negative electrode active material component concentration drops, and it is found that the functionality of the negative electrode may fail to be sufficiently brought out, and battery performance may be impaired.

In the present invention, vanadium leaching in the positive electrode is averted, and impairment of in cycle characteristics and rate performance are prevented, by causing a vanadium-based compound, corresponding to the vanadium-based compound contained in the positive electrode active material, to be dispersed in the negative electrode active material layer.

### BRIEF DESCRIPTION OF THE DRAWINGS

- Fig. 1: is a schematic cross-sectional diagram illustrating an example of an embodiment of a lithium ion secondary battery according to an embodiment;
- Fig. 2: is a schematic cross-sectional diagram illustrating an example of an embodiment of a lithium ion secondary battery according to the embodiment;
- Fig. 3: illustrates a relationship between a discharge rate C and rate discharge capacity holding amount before cycling; and
- Fig. 4: illustrates a relationship between a discharge rate C and rate discharge capacity holding amount after cycling.

### DESCRIPTION OF THE PREFERRED EMBODIMENTS

Embodiments of the present invention are explained in detail below. A lithium ion secondary battery according to the present embodiment comprises a positive electrode provided with a positive electrode mix layer that comprises a positive electrode active material the main component whereof is Li₃V₂(PO₄)₃, as a vanadium-based compound, and a negative electrode that has a negative electrode active material layer comprising a negative electrode active material into which lithium ions can be inserted/removed reversibly.

### Positive Electrode

The positive electrode of the present invention comprises a positive electrode active material having the abovementioned Li₃V₂(PO₄)₃ as a main component. Although various other components may be used, the positive electrode can be specifically produced in the manner described below.

Firstly, Li₃V₂(PO₄)₃ can be produced by, for instance, mixing a lithium source such as LiOH, LiOH·H₂O or the like, a vanadium source such as V₂O₅, V₂O₃ or the like, and a phosphoric acid source such as NH₄H₂PO₄, (NH₄)₂HPO₄ or the like, with reaction, firing and so forth of the resulting mixture. Ordinarily, Li₃Vₓ(PO₄)₃ is obtained in the form of particles resulting from crushing of a fired product.

Also, Li₃V₂(PO₄)₃ itself has low electron conductivity, and hence the surface of the particles is preferably subjected to a conductive carbon coating process. Doing so allows enhancing the electron conductivity of Li₃V₂(PO₄)₃.

A known method can be used in the conductive carbon coating process. For instance, a conductive carbon coating film can be formed on the surface by using citric acid, ascorbic acid, polyethylene glycol, sucrose, methanol, propene, carbon black, Ketjen black or the like, as a carbon coating film material, and mixing the latter in, during the reaction and/or during firing in the above-described production of Li₃V₂(PO₄)₃.

The particle size of the Li₃V₂(PO₄)₃ particles is not particularly limited, and there can be used Li₃V₂(PO₄)₃ particles of a desired particle size. The particle size influences the stability and density of Li₃V₂(PO₄)₃. Preferably, therefore, the D₅₀ of the particle size distribution of secondary particles of Li₃V₂(P0₄)₃ ranges from about 0.5 µm to 25 µm.

A positive electrode mix layer is formed as a result of a process that involves coating a positive electrode collector with a positive electrode slurry, which results from dispersing, in a solvent, a mixture that comprises a positive electrode active material having the obtained Li₃V₂(PO₄)₃ as a main component, plus a binder and a conduction aid, and drying then the whole. For instance, pressing using a press may follow the drying process. The positive electrode mix layer becomes fixed homogeneously and firmly to the collector. The thickness of the positive electrode mix layer ranges from 10 µm to 200 µm, preferably from 20 µm to 100 µm.

As the binder used for forming the positive electrode mix layer there can be used, for instance, a fluorine-containing resin such as polyvinylidene fluoride or the like, an acrylic binder, an elastomeric binder such as SBR, a thermoplastic resin such as polypropylene or polyethylene, or carboxymethyl cellulose. Preferably, the binder is a fluorine-containing resin or a thermoplastic resin, in particular a fluorine-containing resin, that is chemically and electrically stable in the nonaqueous electrolyte solution that is used in the lithium ion secondary battery according to the present embodiment.

Other than polyvinylidene fluoride, examples of the fluorine-containing resin include, for instance, polytetrafluoroethylene, vinylidene fluoride-trifluoroethylene copolymers, ethylene-tetrafluoroethylene copolymers, and propylene-tetrafluoroethylene copolymers. The blending amount of the binder ranges for instance from 0.5 to 20 wt% with respect to the positive electrode active material.

As the conduction aid that is used for forming the positive electrode mix layer there can be used, for instance, conductive carbon such as Ketjen black, a metal such as copper, iron, silver, nickel, palladium, gold, platinum, indium or tungsten, or a conductive metal oxide such as indium oxide or tin oxide. The blending amount of the conduction aid ranges for instance from 1 to 30 wt% with respect to the positive electrode active material.

As the solvent used for forming the positive electrode mix layer there can be used, for instance, water, isopropyl alcohol, N-methyl pyrrolidone (NMP), dimethylformamide or the like. The amount used of the solvent ranges for instance from 40 to 60 wt% with respect to the positive electrode active material.

The face of the positive electrode collector that comes into contact with the positive electrode mix layer may be of a conductive substrate that exhibits conductivity. As the positive electrode collector there can be used, for instance, a conductive substrate formed of a conductive material such as a metal, a conductive metal oxide or conductive carbon, or a non-conductive substrate main body that is covered with the abovementioned conductive material. Preferably, the conductive material is copper, gold or aluminum, or an alloy of the foregoing, or conductive carbon.

In the positive electrode collector there can be used an expanded metal, perforated metal, foil, mesh, foam, or the like of the abovementioned materials. The shape, number and so forth of through-holes in the case of a porous body is not particularly limited, and can be appropriately set to lie within a range such that migration of lithium ions is not hindered.

The basis weight of the positive electrode mix layer ranges from 5 to 20 mg/cm². Herein, the term basis weight denotes the basis weight of the positive electrode mix layer on one side of the positive electrode collector. In a case where the positive electrode mix layer is formed on both sides of the positive electrode collector, the positive electrode mix layers on the one side and the other side are formed so as to lie each within the above range.

Excellent cycle characteristics can be obtained by setting the porosity of the positive electrode mix layer to range from 35 to 65 %. Cycle deterioration occurs if the porosity of the positive electrode mix layer is smaller than 35 %. A porosity of the positive electrode mix layer in excess of 65 % is undesirable, since although excellent cycle characteristics can be preserved, capacity and/or output may however drop in such a case. More preferably, the porosity of the positive electrode mix layer ranges from 40 to 60 %.

### Negative, Electrode

To produce a negative electrode in the present embodiment, a mixture is obtained by adding a vanadium compound-containing additive, besides a negative electrode active material and a binder. This mixture is dispersed in a solvent, to yield a negative electrode slurry that is then coated onto a negative electrode collector, with drying and so forth, to form as a result a negative electrode mix layer. As the binder, solvent and collector there can be used the same binder, solvent and collector as in the above-described positive electrode.

Examples of negative electrode active materials include, for instance, lithium-based metallic materials, intermetallic compound materials of a metal and metallic lithium, lithium compounds, or lithium-intercalated carbon materials.

Examples of lithium-based metallic material include, for instance, metallic lithium and lithium alloys (for instance, Li-Al alloys). Intermetallic compound materials of a metal and metallic lithium are intermetallic compounds that comprise, for instance, tin, silicon or the like. A lithium compound may be, for instance, lithium nitride.

Examples of lithium-intorcalated carbon materials include, for instance, carbon-based materials, such as graphite or non-graphitizable carbon materials, and polyacene substances. The polyacene-based substance may be, for instance, PAS which is insoluble and non-fusible, and has a polyacene backbone. These lithium-intercalated carbon materials are all substances into which lithium ions can be doped reversibly. The thickness of the negative electrode mix layer ranges ordinarily from 10 µm to 200 µm, preferably from 20 µm to 100 µm.

The vanadium compound-containing additive that is added to the negative electrode active material layer is, for instance, a vanadium oxide such as V₂O₃, V₃O₈, LiₓV₂O₅ or the like, or a vanadium phosphate compound such as LiVPO₄, Li₃V₂(PO₄)₃ or the like. Particularly preferred herein are V₂O₅, LiₓV₂O₅, Li₃V₂(PO₄)₃ and V₃O₈. Preferably, the addition amount of the vanadium compound-containing additive ranges from 0.5 to 10 wt% with respect to the negative electrode active material layer. The above addition amount range allows reliably eliciting or generating an effect of preventing local concentration of lithium ions in the negative electrode active material, and, as a result, allows preventing reliably drops in the cycle characteristics and rate performance of the battery.

The basis weight of the negative electrode mix layer is appropriately designed in accordance with the basis weight of the positive electrode mix layer. In lithium ion secondary batteries, ordinarily, the capacity (mAh) of the positive electrode and the negative electrode are set to be substantially identical, from the viewpoint of energy density and striking a balance between the capacities of the positive and negative electrodes. Accordingly, the basis weight of the negative electrode mix layer is set on the basis of, for instance, the type of the negative electrode active material and the capacity of the positive electrode.

### Nonaqueous Electrolyte Solution

The nonaqueous electrolyte solution of the present invention is not particularly limited, and known materials may be used. In terms of avoiding electrolysis at high voltage, for instance, and enabling a stable presence of lithium ions, an electrolyte solution can be used in which an ordinary lithium salt, as the electrolyte, is dissolved in an organic solvent.

Examples of electrolytes include, for instance, CF₃SO₃Li, C₄F₉SO₈Li, (CF₃SO₂)₂NLi, (CF₃SO₂)₃CLi, LiBF₄, LiPF₆, LiClO₄ or the like, or mixtures of two or more of the foregoing.

Examples of organic solvents include, for instance, propylene carbonate, ethylene carbonate, butylene carbonate, dimethyl carbonate, diethyl carbonate, ethyl methyl carbonate, vinyl carbonate, trifluoromethyl propylene carbonate, 1,2-dimethoxyethane, 1,2-diethoxyethane, γ-butyrolactone, tetrahydrofuran, 1,3-dioxolane, 4-methyl-1,3-dioxolane, diethyl ether, sulfolane, methyl sulfolane, acetonitrile, propionitrile or the like, or mixed solvents of two or more of the foregoing. The electrolyte concentration in the nonaqueous electrolyte solution ranges from 0.1 mol/L to 5.0 mol/L, preferably from 0.5 mol/L to 3.0 mol/L. The nonaqueous electrolyte solution may be a liquid, or a solid electrolyte or polymer-gel electrolyte obtained through mixing with a plasticizer, polymer or the like.

### Separator

The separator used in the present invention is not particularly limited, and a known separator can be used. For instance, there can be preferably used a porous body that exhibits durability towards the electrolyte solution, the positive electrode active material and the negative electrode active material and that has interconnected pores and lacks electron conductivity. Examples of such porous bodies include, for instance, woven fabrics, nonwoven fabrics, microporous membranes of synthetic resins, glass fibers and the like. A microporous membrane made up of a synthetic resin is preferably used herein, in particular a microporous membrane made up of a polyolefin such as polyethylene or polypropylene, from the viewpoint of thickness, membrane strength and membrane resistance.

### Lithium Ion Secondary Battery

The lithium ion secondary battery according to the present embodiment is provided with a positive electrode that comprises a positive electrode active material, a negative electrode that comprises a negative electrode active material, a separator, and a nonaqueous electrolyte solution such as those described above.

An example of a lithium ion secondary battery will be explained below, with reference to accompanying drawings, as an example of an embodiment of a storage device of the present invention.

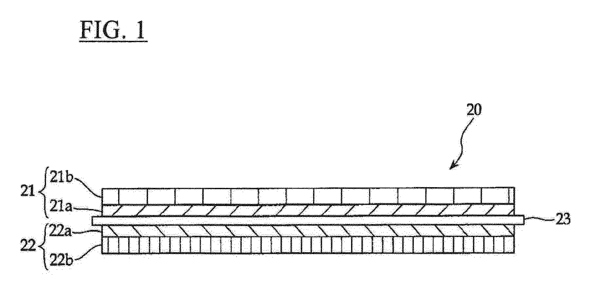

Fig. 1 is a schematic cross-sectional diagram illustrating an example of an embodiment of a lithium ion secondary battery according to the present invention. As illustrated in the figure, a lithium ion secondary battery 20 is made up of a positive electrode 21 and a negative electrode 22 that are disposed opposing each other across a separator 23.

The positive electrode 21 is made up of a positive electrode mix layer 21a that comprises the positive electrode active material of the present invention, and of a positive electrode collector 21b. The positive electrode mix layer 21a is formed on the face of the positive electrode collector 21 b that lies on the separator 23 side. The negative electrode 22 is made up of a negative electrode mix layer 22a and a negative electrode collector 22b.

The negative electrode mix layer 22a is formed on the face of the negative electrode collector 22b that lies on the separator 23 side. The positive electrode 21, negative electrode 22 and separator 23 are sealed in package container, not shown. A nonaqueous electrolyte solution fills the interior of the package container. Examples of package materials include, for instance, battery cans, laminate films and the like. Respective leads (not shown) for external terminal connection are connected, as the case may require, to the positive electrode collector 21b and the negative electrode collector 22b.

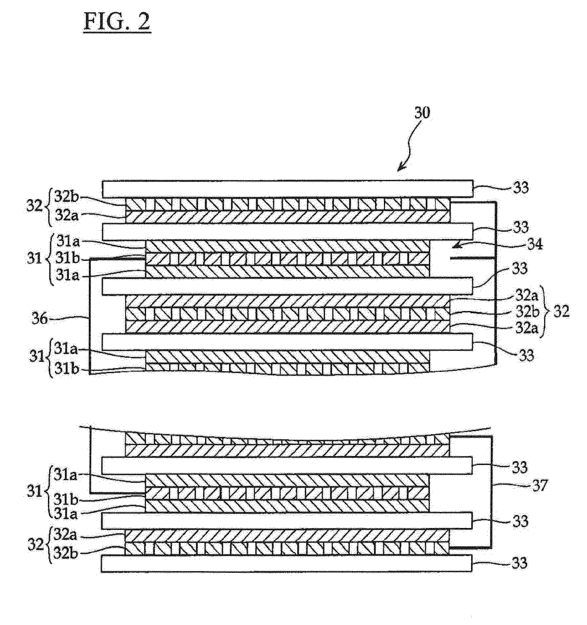

Next, Fig. 2 is a schematic cross-sectional diagram illustrating another example of an embodiment of a lithium ion secondary battery according to the present invention. As illustrated in the figure, a lithium ion secondary battery 30 is provided with an electrode unit 34 that results from alternately stacking a plurality of positive electrodes 31 and negative electrodes 32 with separators 33 interposed in between.

Each positive electrode 31 is made up of a positive electrode mix layer 31a that is provided on both sides of a positive electrode collector 31b. Each negative electrode 32 is made up of a negative electrode mix layer 32a that is provided on both sides of a negative electrode collector 32b (negative electrode mix layers 32a are provided on one side alone at the topmost and lowermost negative electrodes 32).

Each positive electrode collector 31b has a protrusion, not shown. The protrusions of the plurality of positive electrode collectors 31b overlap each other, and a lead 36 is welded to the overlap. Likewise, each negative electrode collector 32b has a not-illustrated protrusion. The protrusions of the plurality of negative electrode collectors 32b overlap each other, and a lead 37 is welded to the overlap. The lithium ion secondary battery 30 is configured by sealing the electrode unit 34, and a nonaqueous electrolyte solution, inside a package container, not shown, of a laminate film or the like. The purpose of the leads 36, 37 is to achieve a connection to an external device, and hence are exposed outside the package container.

The lithium ion secondary battery 30 may also be provided with a lithium electrode, for pre-doping of lithium ions, on the positive electrode, the negative electrode, or both the positive and negative electrodes, in the package container. In this case, a through-hole for facilitating lithium ion migration is provided running through the positive electrode collector 31b and/or the negative electrode collector 32b, in the stacking direction of the electrode unit 34.

In the lithium ion secondary battery 30, negative electrodes are disposed at the topmost and lowermost portions, but the lithium ion secondary battery 30 is not limited thereto, and, instead, positive electrodes may be disposed at the topmost and lowermost portions.

### EXAMPLES

The present invention is explained below based on examples.

### Example 1

### (1) Production of a Positive Electrode

The below-described materials for a positive electrode mix layer:

| | |
|---|---|
| active material (Li₃V₂(PO₄)₃) | 90 parts by weight |
| conduction aid (carbon black) | 5 parts by weight |
| binder (PVdF) | 5 parts by weight |
| solvent (N-methyl-2-pyrrolidone (NMP)) | 100 parts by weight |

were mixed to yield a positive electrode slurry. The positive electrode slurry was coated onto a positive electrode collector of aluminum foil (thickness 30 µm), and was dried, to form a positive electrode mix layer on the positive electrode collector. The basis weight of the positive electrode mix layer was 22 mg/cm² (per side). The coated portion (positive electrode mix layer formation portion) was cut to 50×50 mm, while leaving a 10 mmx 10 mm uncoated portion as a tab for lead connection. The porosity of the positive electrode mix layer was 40 % as measured using a mercury porosimeter.

### (2) Production of a Negative Electrode

The below-described material for a negative electrode mix layer:

| | |
|---|---|
| active material (graphite) | 94 parts by weight |
| vanadium - containing additive A (V₂O₅) | 1 part by weight |
| binder (PVdF) | 5 parts by weight |
| solvent (NMP) | 150 parts by weight |

were mixed to yield a negative electrode slurry. The negative electrode slurry was coated onto a negative electrode collector of copper foil (thickness 10 µm), to form a negative electrode mix layer on the negative electrode collector. The basis weight of the negative electrode mix layer was 7 mg/cm² (per side). The coated portion (negative electrode mix layer formation portion) was cut to 52 mm x 52 mm, while leaving a 10 mm x 10 mm uncoated portion as a tab for lead connection.

### (3) Production of a Battery

A lithium ion secondary battery such as the one of the embodiment in Fig. 2 was produced using nine positive electrodes and ten negative electrodes produced as described above. Specifically, the positive electrodes and the negative electrodes were stacked with separators interposed in between, and the periphery of the resulting stack was fixed with tape. The tabs of the positive electrode collectors were caused to overlap each other and an aluminum metal lead was welded thereto. Likewise, the tabs of the negative electrode collectors were caused to overlap each other and a nickel metal lead was welded thereto.

The foregoing were sealed in an aluminum laminate package material, the positive electrode lead and the negative electrode lead were led out of the package material, and the whole was fusion-sealed while leaving an opening for electrolyte solution filling. An electrolyte solution was poured in through the opening for electrolyte solution filling, the interior of the electrodes was impregnated with the electrolyte solution, through vacuum impregnation, and the laminate was vacuum-sealed.

### (4) Charge and Discharge Testing

The positive electrode lead and the negative electrode lead of the battery produced as described above were connected to corresponding terminals of a charge and discharge test device (by Aska Electronic Co., Ltd.). The battery was charged at constant current and constant voltage, at a maximum voltage of 4.2 V, and a current rate 2 C, for 45 minutes. Once charging was over, the battery was discharged at constant current, at a current rate 1 C, down to 2.5 V.

The above was repeated over 1000 cycles. The energy density (Wh/kg) was calculated on the basis of the capacity measured upon initial discharge, and the cycle capacity retention rate (1000-th cycle discharge capacity / initial discharge capacity × 100) was calculated. The capacity retention rate was 71 %.

### (5) Discharge Rate Characteristic Test

A produced battery (notated as battery 1) having undergone not a single charge or discharge was 100 % charged (SOC 100), and a discharge capacity 1 (0.1 C) (mAh/g) was measured at 25 °C and 0.1 C. A battery (notated as battery 2) having repeatedly undergone 1000 cycles of charge and discharge as in (4) was likewise 100 % charged (SOC 100), and a discharge capacity 2 (0.1 C) (mAh/g) was measured at 25 °C and 0.1 C. The discharge capacity 1 (0.1 C) was 37.1 (mAh/g). The discharge capacity 2 (0.1 C) was 33.7 (mAh/g).

The discharge capacity 1 (α C) (mAh/g) and discharge capacity 2 (α C) (mAh/g) were likewise measured for the battery 1 and the battery 2 having discharge accelerated to 0.2 C, 0.5 C, 1.0 C, 2 C, 3 C, 4 C, 5 C, 6 C and 7 C. Herein, α denotes any one numeral from among 0.5, 1, 2, 3, 4, 5, 6 and 7. The results are given in Table 2 and Table 3 below.

A rate discharge capacity holding rate was calculated in the form of a value, expressed as a percentage, of the value of capacity for 0.2 C, 0.5 C, 1.0 C, 2 C, 3 C, 4 C, 5 C, 6 C and 7 C discharge with respect to 0.1 C discharge. That is, there are defined (rate discharge capacity holding rate 1 of battery 1) (α C)=(discharge capacity 1 (α C))/(discharge capacity I (0.1 C)) and (rate discharge capacity holding rate 2 of battery 2) (α C)=(discharge capacity 2 (α C))/(discharge capacity 2 (0.1 C)). The results are given in Tables 2 to 5 below. In particular, the (rate discharge capacity holding rate 1) (7 C) before cycling, for 7 C discharge was 83 %, and the (rate discharge capacity holding rate 2) (7 C) for 7 C discharge after cycling was 81 %.

### Example 2

A battery was produced and evaluated in exactly the same way as in Example 1, but herein there was added 1 part by weight of LiVOPO₄, as a vanadium-containing additive B, in the material for a negative electrode mix layer. The capacity retention rate was 72 %. The results of the discharge rate characteristic test were substantially identical to those of Example 1.

### Example 3

A battery was produced and evaluated in exactly the same way as in Example 1, but herein there was added 1 part by weight of Li₃V₂(PO₄)₃, as a vanadium-containing additive C, in the material for a negative electrode mix layer. The capacity retention rate was 71 %. The results of the discharge rate characteristic test were substantially identical to those of Example 1.

### Example 4

A battery was produced and evaluated in exactly the same way as in Example 1, but herein there was added 1 part by weight of V₃O₈, as a vanadium-containing additive D, in the material for a negative electrode mix layer. The capacity retention rate was 73 %. The results of the discharge rate characteristic test were substantially identical to those of Example 1.

### Example 5

A battery was produced and evaluated in exactly the same way as in Example 1, but herein there were added 94.5 parts by weight of negative electrode active material and 0.5 parts by weight of V₂O₅, as the vanadium-containing additive A, in the material for a negative electrode mix layer. The capacity retention rate was 62 %. In the results of the discharge rate characteristic test, the rate discharge capacity retention rate after cycling was slightly lower than in the measurement results of Example 1. In particular, the (rate discharge capacity holding rate 2) (7 C) after cycling, for 7 C discharge was 78 %.

### Example 6

A battery was produced and evaluated in exactly the same way as in Example 1, but herein there were added 85 parts by weight of the negative electrode active material and 10 parts by weight of V₂O₅, as the vanadium-containing additive A, in the material for a negative electrode mix layer. The capacity retention rate was 78 %. In the results of the discharge rate characteristic test, the rate discharge capacity retention rate after cycling was slightly higher than in the measurement results of Example 1. In particular, the (rate discharge capacity holding rate 2) (7 C) after cycling, for 7 C discharge was 83 %.

### Comparative Example 1

A battery was produced, and evaluated, under exactly the same conditions as in Example 1, but herein there were added 95 parts by weight of the negative electrode active material, and no vanadium-containing additive, in the material for a negative electrode mix layer. The capacity retention rate was 55 %. In the results of the discharge rate characteristic test, the rate discharge capacity retention rate after cycling was significantly lower than in the measurement results of Example 1. In particular, the (rate discharge capacity holding rate 2) (7 C) after cycling, for 7 C discharge was 76 %.

### Comparative Example 2

A battery was produced and evaluated in exactly the same way as in Example 1, but herein there were added 94.8 parts by weight of the negative electrode active material and 0.2 parts by weight of V₂O₃, as the vanadium-containing additive A, in the material for a negative electrode mix layer. The capacity retention rate was 54 %. The results of the discharge rate characteristic test were substantially identical to those of Comparative Example 1.

Table 1 gives the conditions, such as materials of the various electrodes, along with capacity measurement results of capacity retention rate and (rate discharge capacity holding rate 2) (7 C) after cycling, for 7 C discharge, in Examples 1 to 5 and Comparative Examples 1 and 2.

**Table 1**

| | | | | Example 1 | Example 2 | Example 3 | Example 4 | Example 5 | Example 6 | Comp. Example 1 | Comp. Example 2 |
|---|---|---|---|---|---|---|---|---|---|---|---|
| Positive electrode | Active material | | Li₃V₂(PO₄)₃ | 90 parts by weight | 90 parts by weight | 90 parts by weight | 90 parts by weight | 90 parts by weight | 90 parts by weight | 90 parts by weight | 90 parts by weight |
| | Conduction aid | | CB | 5 parts by weight | 5 parts by weight | 5 parts by weight | 5 parts by weight | 5 parts by weight | 5 parts by weight | 5 parts by weight | 5 parts by weight |
| | Binder | | PVdF | 5 parts by weight | 5 parts by weight | 5 parts by weight | 5 parts by weight | 5 parts by weight | 5 parts by weight | 5 parts by weight | 5 parts by weight |
| | Solvent | | NMP | 100 parts by weight | 100 parts by weight | 100 parts by weight | 100 parts by weight | 100 parts by weight | 100 parts by weight | 100 parts by weight | 100 parts by weight |
| Negative electrode | Negative electrode active material layer | Active material | Graphite | 94 parts by weight | 94 parts by weight | 94 parts by weight | 94 parts by weight | 94.5 parts by weight | 85 parts by weight | 95 parts by weight | 94.8 parts by weight |
| | | Additive A | V₂O₅ | 1 part by weight | | | | 0.5 parts by weight | 10 parts by weight | | 0.2 parts by weight |
| | | Additive B | LiVOPO₄ | | 1 part by weight | | | | | | |
| | | Additive C | Li₃V₂(PO₄)₃ | | | 1 part by weight | | | | | |
| | | Additive D | V₃O₈ | | | | 1 part by weight | | | | |
| | Positive electrode | | | 5 parts by weight | 5 parts by weight | 5 parts by weight | 5 parts by weight | 5 parts by weight | 5 parts by weight | 5 parts by weight | 5 parts by weight |
| | Solvent | | NMP | 150 parts by weight | 150 parts by weight | 150 parts by weight | 150 parts by weight | 150 parts by weight | 150 parts by weight | 150 parts by weight | 150 parts by weight |
| Capacity retention rate (after 1000 cycles) | | | | 71% | 72% | 71% | 73% | 62% | 78% | 55% | 54% |
| 7 C rate characteristic before cycling | | | | 83% | 83% | 83% | 83% | 83% | 84% | 82% | 82% |
| 7 C rate characteristic after cycling | | | | 81% | 81% | 81% | 81% | 78% | 83% | 76% | 76% |

With reference to Table 1, the capacity retention rate after 1000 cycles in the case of the lithium ion secondary battery of Comparative example 1, where none of the vanadium-containing additives A to D were added to the negative electrode active material layer, exhibited a comparatively low numerical value, of 55%. This can be attributed to a local potential difference that arises in the negative electrode on account of the influence of vanadium leaching that occurs in the positive electrode, as described above. By contrast, the capacity retention rate after 1000 cycles in Example 1 through Example 4 was of 70% or higher.

These numerical values are very high compared to those of the lithium ion secondary battery of Comparative Example 1. The only difference between the lithium ion secondary batteries of Examples I to 4 and the lithium ion secondary battery of Comparative Example 1 is whether any one of the vanadium-containing additives A to D was added or not to the negative electrode active material layer. Therefore, it is found that adding any one of the vanadium-containing additives A to D to the negative electrode active material layer contributes to achieving a high cycle retention rate.

In Comparative Example 2, the additive A is added to the negative electrode active material layer in an amount of 0.2 parts by weight with respect to 100 parts by weight of the negative electrode active material layer. The capacity retention rate after 1000 cycles in the lithium ion secondary battery of Comparative Example 2, however, exhibits a low numerical value, of 54 %. The reasons for this low cycle retention rate can be ascribed to the excessively small addition amount of the vanadium-containing additive A, which prevents the vanadium compound from being dispersed throughout the negative electrode active material layer; instead, portions where the vanadium compound is locally present are formed in the negative electrode active material layer, so that local potential differences are prone to occur ultimately in the negative electrode active material layer. A minimum addition amount of vanadium-containing additive A that must be added is therefore such an amount as enables the vanadium compound to be dispersed substantially throughout the negative electrode active material layer.

In Example 5, the vanadium-containing additive A is added to the negative electrode active material layer in an amount of 0.5 parts by weight with respect to 100 parts by weight of the negative electrode active material layer. The lithium ion secondary battery of Example 5 exhibits a capacity retention rate after 1000 cycles of 62 %. The lithium ion secondary battery of Example 5 exhibits a significantly greater capacity retention rate than the lithium ion secondary battery of Comparative Example 1, in which no vanadium-containing additive is added at all.

It is found therefore that dispersion of the vanadium compound throughout the negative electrode active material layer elicits the effect of preventing the occurrence of local potential differences, while capacity retention rate is also found to be sufficient for practical purposes. In cases where the positive electrode and negative electrode materials of the examples are used, therefore, it is deemed that addition amount of the vanadium-containing additive is preferably 0.5 wt% or more with respect to the negative electrode active material layer.

In Example 6, the vanadium-containing additive A is added to the negative electrode active material layer in an amount of 10 parts by weight with respect to 100 parts by weight of the negative electrode active material layer. The lithium ion secondary battery of Example 6 exhibits a capacity retention rate after 1000 cycles of 78 %. The numerical value itself of the capacity retention rate is the highest value from among the numerical values in the examples. Although the addition amount itself of the vanadium-containing additive A is for instance 10 times the addition amount of the vanadium-containing additive A in Example 1, the difference in capacity retention rate is but of several %.

This suggests that increasing the addition amount of vanadium-containing additive A any further would not foreseeable translate into an dramatic increase in the capacity retention rate. On the contrary, it is deemed that setting a 10-fold or greater addition amount of the vanadium-containing additive A would result in a higher potential of the negative electrode active material layer as a whole, and in a small potential difference vis-à-vis the positive electrode, and battery capacity would drop.

In cases where the positive electrode and negative electrode materials of the examples are used, therefore, it is deemed that the addition amount of the vanadium-containing additive is preferably no greater than 10 wt% with respect to the negative electrode active material layer.

The results of discharge rate characteristic tests performed in Examples I to 4 and 6, and Comparative Examples 1 and 2, are given in Table 2 to Table 5.

**Table 2**

| Rate discharge capacity 1 (α C) mAh (before cycling) | | | | | | | | | | |
|---|---|---|---|---|---|---|---|---|---|---|
| | α=0.1 | α=0.2 | α=0.5 | α=1.0 | α=2.0 | α=3.0 | α=4.0 | α=5.0 | α=6.0 | α=7.0 |
| Examples 1 to 4 | 37.1 | 37.0 | 36.9 | 36.3 | 36.0 | 35.8 | 34.8 | 32.8 | 32.2 | 30.7 |
| Example 6 | 36.2 | 36.2 | 36.0 | 35.7 | 35.4 | 35.0 | 34.3 | 32.5 | 31.5 | 30.3 |
| Comparative. Examples 1 and 2 | 37.3 | 37.3 | 37.0 | 36.8 | 36.4 | 36.0 | 35.2 | 33.3 | 32.0 | 30.4 |

**Table 3**

| Rate discharge capacity 2 (α C) mAh (after cycling) | | | | | | | | | | |
|---|---|---|---|---|---|---|---|---|---|---|
| | α=0.1 | α=0.2 | α=0.5 | α=1.0 | α=2.0 | α=3.0 | α=4.0 | α=5.0 | α=6.0 | α=7.0 |
| Examples 1 to 4 | 33.7 | 33.7 | 33.5 | 33.2 | 32.9 | 32.6 | 31.8 | 29.7 | 29.4 | 27.4 |
| Example 6 | 33.1 | 31.0 | 32.8 | 32.5 | 32.3 | 31.9 | 31.2 | 29.3 | 29.1 | 27.5 |
| Comparative Examples 1 and 2 | 33.5 | 33.4 | 33.3 | 33.2 | 32.9 | 32.4 | 31.7 | 29.6 | 27.8 | 25.5 |

**Table 4**

| Rate discharge capacity holding rate 1 (α C) % (before cycling) | | | | | | | | | | |
|---|---|---|---|---|---|---|---|---|---|---|
| | α=0.1 | α=0.2 | α=0.5 | α=1.0 | α=2.0 | α=3.0 | α=4.0 | α=5.0 | α=4.0 | α=7.0 |
| Examples 1 to 4 | 100.0% | 100.0% | 99.4 % | 98.7% | 97.8% | 96.5% | 94.2 % | 90.7% | 86.7% | 82.7% |
| Example 6 | 100.0% | 100.0% | 99.4% | 98.8% | 98.0% | 96.9% | 94.8% | 91.0% | 87.0% | 83.6% |
| Comp. Examples 1 and 2 | 100.0 % | 100.0% | 99.3% | 98.6 % | 97.7 % | 96.5 % | 94.4 % | 89.7 % | 85.8 % | 81.6 %. |

**Table 5**

| Rate discharge capacity holding rate 2 (α C) % (after cycling) | | | | | | | | | | |
|---|---|---|---|---|---|---|---|---|---|---|
| | α=0.1 | α=0.2 | α=0.5 | α=1.0 | α=2.0 | α=3.0 | α=4.0 | α=5.0 | α=6.0 | α=7.0 |
| Examples 1 to 4 | 100.0% | 100.0% | 99.3 % | 98.6% | 97.7% | 96.6% | 94.3% | 91.3% | 87.2 % | 81.3% |
| Example 6 | 100.0% | 100.0% | 99.4% | 98.7% | 97.8% | 96.7 % | 94.6 % | 92.0% | 88.0% | 83.0% |
| Comparative Examples 1 and 2 | 100.0 % | 100.0 % | 99.3 % | 18.6% | 97.6 % | 96.4 % | 93.0 % | 88.5 % | 83.0 % | 76.2 % |

As can be grasped with reference to the numerical values given in Table 2, the comparative examples and the examples did not exhibit that much of a difference as regards the rate discharge capacity before cycling (i.e. discharge capacity 1 (α C)). The change between discharge capacity 1 (5 C), discharge capacity 1 (6 C) and discharge capacity 1 (7 C) for a discharge rate exceeding 5.0 C was similar between the examples and the comparative examples. This can be clearly understood, with reference to the rate discharge capacity holding rate 1 (α C) before cycling given in Table 4, from the fact that there is no large difference, in this value, between the examples and the comparative examples.

On the other hand, as can be grasped with reference to the numerical values given in Table 3, the rate discharge capacity after 1000 cycles (i.e. discharge capacity 2 (α C)) exhibited large differences between the comparative examples and the examples. In particular, the reduction between discharge capacity 1 (5 C), discharge capacity 1 (6 C) and discharge capacity 1 (7 C) for a discharge rate exceeding 5.0 C is clearly greater in the comparative examples than in the examples. With reference to the rate discharge capacity holding rate 2 (α C) after cycling given in Table 5, it is clearly seen that the degree of decrease of this value in the comparative examples is greater than the degree or reduction in the examples.

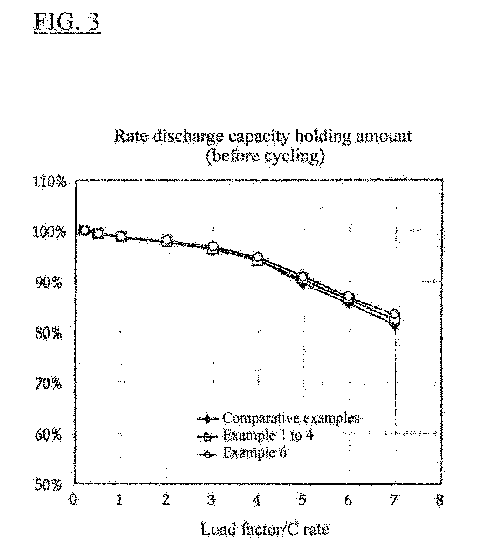

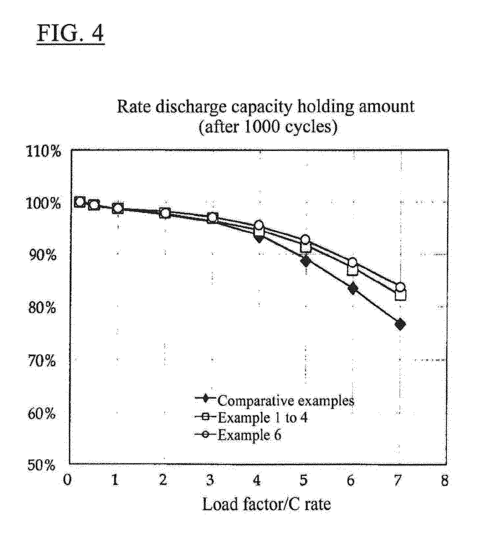

Fig. 3 and Fig. 4 illustrate the relationship between the discharge rate (C) and the rate discharge capacity before cycling and the rate discharge capacity after cycling. As can be clearly seen from the figures, the rate discharge capacity before cycling yields similar curves for the examples and comparative examples, without significant differences among them. By contrast, the rate discharge capacity after cycling exhibits differences between the examples and the comparative examples. In particular, the differences become significant in the region where the discharge rate is 5 C or greater.

Therefore, it was found that good results for the discharge capacity holding rate after cycling as well are obtained through dispersion of the vanadium-based compound in the negative electrode active material layer. This is seen, in particular, in Example 5, in which the addition amount of vanadium-based compound to the negative electrode active material layer is comparatively small, and where the rate discharge capacity holding rate 2 (7 C) after cycling takes on a comparatively low value, of 78 % (see Table 1). The above feature is also clearly apparent from the fact that in Example 6, by contrast, where the addition amount of vanadium-based compound to the negative electrode active material layer is comparatively large, the rate discharge capacity holding rate 2 (7 C) after cycling takes on a comparatively high value, of 83.0 %.

Good results were obtained for the examples and the comparative examples as regards the rate discharge capacity holding rate 2 after 1000 cycles. When the above is considered in conjunction with the fact that the rate discharge capacity holding rate 1 before cycling does not exhibit large differences between the examples and the comparative examples, it can be inferred that the difference in rate discharge capacity holding rate between examples and comparative examples becomes greater the higher the number of cycles is. Therefore, it is found that the batteries of the examples are considerably superior to the batteries of the comparative examples as regards the rate discharge capacity holding rate after 1000 or more charge and discharge cycles.

The present invention is not limited to the above-described features of embodiments and examples, and may accommodate various modifications that are encompassed within the scope of the invention. In the embodiments, for instance, V₂O₅, V₃O₈, LiVPO₄ and Li₃V₂(PO₄)₃ have been exemplified as the vanadium-based compound that is added to the negative electrode active material layer, but the invention is not limited thereto, and there may be used, for instance, a vanadium oxide having a basic composition such as LiₓV₂O₅ or the like, or various other vanadium-based compounds, so long as such compounds are capable of dispersing in the negative electrode active material layer. Alternatively, there may be added a plurality of types of vanadium-based compounds.

The main component of the positive electrode active material is not limited to the above-described Li₃V₂(PO₄)₃, and there may be used another vanadium phosphate compound, such as LiPO₄, or a vanadium oxide having V₂O_{5,} V₃O₈ and LiₓV₂O₅ or the like as the basic composition thereof.

The vanadium-based compound that is added to the negative electrode active material layer and the vanadium-based compound that is the main component of the positive electrode active material may have a structure in which part of the vanadium composition is replaced by another transition metal or the like, for instance a structure such as LiₓMyV₂O₅ (where M is a metal or the like).

In the examples and so forth it has been indicated that the addition amount of the vanadium-based compound ranges preferably from 0.5 to 10 wt% with respect to the negative electrode active material layer. The above range is a numerical value range that is set in order to achieve the effect of causing a vanadium compound to become dispersed substantially throughout the negative electrode active material layer. Therefore, the addition amount may be modified in instances where the preferred conditions of addition amount for causing the above effect may be different, on account of variations in the types of positive electrode active material and/or negative electrode active material, and variations in the blending amount thereof.

### List of Reference Signs

- 20: = lithium ion secondary battery
- 21: = positive electrode
- 21a: = positive electrode mix layer
- 21b: = positive electrode collector
- 22: = negative electrode
- 22a: = negative electrode mix layer
- 22b: = negative electrode collector
- 23: = separator
- 30: = lithium ion secondary battery
- 31: = positive electrode
- 31a: = positive electrode mix layer
- 31b: = positive electrode collector
- 32: = negative electrode
- 32a: = negative electrode mix layer
- 32b: = negative electrode collector
- 33: = separator
- 34: = electrode unit
- 36: = lead
- 37: = lead

## Claims

1. A lithium ion secondary battery, comprising:
- a positive electrode (21, 31) having a positive electrode active material layer (21a, 31a) containing a positive electrode active material having a vanadium-based compound as a main component; and
- a negative electrode (22, 32) having a negative electrode active material layer (22a, 32a) containing a negative electrode active material into which lithium ions can be inserted/removed reversibly,
wherein a vanadium-based compound is dispersed in the negative electrode active material layer (22a, 32a).

2. The lithium ion secondary battery according to claim 1,
wherein the vanadium-based compound dispersed in the negative electrode active material layer (22a, 32a) is a vanadium oxide and/or a vanadium phosphate compound.

3. The lithium ion secondary battery according to claim 2,
wherein the vanadium oxide is selected from among V₂O₅, V₃O₈ and LiₓV₂O₅.

4. The lithium ion secondary battery according to claim 2,
wherein the vanadium phosphate compound is selected from among LiVPO₄ and Li₃V₂(PO₄)₃.

5. The lithium ion secondary battery according to any one of claims 1 to 4, wherein the vanadium-based compound is added to the negative electrode active material layer (22a, 32a) in an addition amount ranging from 0.5 to 10 wt%.
